# EUROPEAN PATENT APPLICATION

(11) **EP 3 337 014 A2**
(43) Date of publication of application: **20.06.2018**
(21) Application number: 17208207.5
(22) Date of filing: 18.12.2017
(51) Int. Cl.: H02K 1/27

(54) **ROTOR OF ELECTRIC MOTOR AND COMPRESSOR**

(30) Priority: 19.12.2016 JP 2016245866
(71) Applicant: MITSUBISHI HEAVY INDUSTRIES THERMAL SYSTEMS, LTD., Tokyo 108-8215 (JP)
(72) Inventor: NII, Masahiro, TOKYO 108-8215 (JP); SASAKI, Mikito, TOKYO 108-8215 (JP); ISOBE, Shinichi, TOKYO 108-8215 (JP); SHIMIZU, Kenji, TOKYO 108-8215 (JP); SATO, Hajime, TOKYO 108-8215 (JP); ESAKI, Ikuo, TOKYO 108-8215 (JP); OGAWA, Makoto, TOKYO 108-8215 (JP); UNO, Masanari, TOKYO 108-8215 (JP); SHIMAYA, Hirofumi, TOKYO 108-8215 (JP)
(74) Representative: Cabinet Beau de Loménie

(57) **Abstract**

The present invention provides a rotor of an electric motor capable of providing a plurality of permanent magnets of the same shape with a small gap.

A rotor of an electric motor of the present invention includes a shaft, a rotor core (10), and a plurality of permanent magnets. The rotor core has a plurality of slot groups (S) arranged in a circumferential direction. Each slot group (S) has a plurality of curved slots (50, 60) curved in a convex circular arc shape toward an inner side in the radial direction of the shaft. Each curved slot has an internal inner surface and an external inner surface in a radial direction. In any of the curved slots, the internal inner surface and the external inner surface have a circular arc shape having the same center. A separation distance between the internal inner surface and the external inner surface in each curved slot, and curvatures of the internal inner surface and the external inner surface are the same as those in any other curved slot. The permanent magnets are disposed in each curved slot and have a circular arc shape of the same size curved along the internal inner surface and the external inner surface of each curved slot.

## Description

### BACKGROUND OF THE INVENTION

### Field of the Invention

The present invention relates to a rotor of an electric motor mounted on a hermetic compressor or the like, and a compressor including the same.

### Description of Related Art

In a hermetic compressor used for compression and circulation of a refrigerant of an air conditioner, in many cases, a permanent magnet synchronous motor is used as a driving motor. Permanent magnets used for the driving motor are roughly classified into rare earth-based permanent magnets and ferrite-based permanent magnets. A ferrite-based permanent magnet is preferable from the viewpoint of cost reduction because material costs thereof are relatively low.

In a motor configured using a ferrite-based permanent magnet, in many cases, in addition to a magnetic torque (a torque derived from the magnetic flux generated by the permanent magnet), a reluctance torque (a torque generated by giving magnetic saliency to the rotor by devising a shape of an iron core in a cross-section of the motor and an arrangement of magnets) is utilized. In this case, by utilizing the reluctance torque, it is possible to reduce the material costs by minimizing an amount of magnets used, while maintaining a uniform generated torque.

As a representative example of the cross-sectional shape of the motor when utilizing both the magnet torque and the reluctance torque, there is a configuration in which a circular arc-shaped slit protruding to an inner diameter side, in particular, a multilayer slit of two or more layers, is provided for the rotor iron core, and the magnet is embedded in the slit. At this time, in many cases, the shape of the slit is a circular arc shape inherent in each layer to coincide with the inherent flow of the magnetic flux.

As disclosed in, for example, FIG. 1 of Patent Document 1, for a motor in which the magnet is embedded by providing a multilayer slit of two or more layers, in order to prevent magnetic saturation of the iron core and enhance an iron core utilization factor, a dedicated magnet may be used for each layer of the circular arc. A problem in this case is that because the magnet shapes of each layer are different from each other, there is a need for investment in manufacturing facilities (searching for magnet types regarding pressurizing and sintering the magnets) dedicated to magnets of each layer.

In order to avoid providing a dedicated magnet in each magnet slot of the inner and outer layers, a case where a circular arc-shaped magnet slot is filled with a polygonal magnet is disclosed in FIG. 2 of Patent Document 2 and the like. In this case, a gap is necessarily generated between the magnet and the iron core, and a magnetic circuit through which it is difficult for the magnetic flux of the magnet to pass (permeance is low) is obtained. Therefore, in particular, in a motor using a ferrite-based permanent magnet, there is a problem that an absolutely small magnet torque becomes yet smaller as compared with in a neodymium-based permanent magnet having a strong magnetic force.

Further, even if it is attempted to form a circular arc shape by inserting a plurality of magnets of the same polygonal shape with the magnet slot as a polygonal shape, what can be achieved by a combination of polygonal magnets is only a shape close to a circular arc. Since a smooth circular arc-shaped magnet slot in which a reluctance torque is extracted to coincide with the original flow of the magnetic flux is not obtained, the area utilization efficiency of the rotor core is lowered.

### [Patent Documents]

[Patent Document 1] Japanese Unexamined Patent Application, First Publication No. 2009-044860
[Patent Document 2] Japanese Unexamined Patent Application, First Publication No. 2012-178922

### SUMMARY OF THE INVENTION

The present invention has been made in view of the above circumstances, and an object thereof is to provide a rotor of an electric motor that can include a plurality of permanent magnets of the same shape with small gaps therebetween.

In order to solve the above problem, the present invention adopts the following means. That is, the rotor of the electric motor according to an aspect of the present invention includes a shaft extending along an axis; a rotor core fixed to an outer circumferential surface of the shaft; and a plurality of permanent magnets disposed in the rotor core, wherein the rotor core has a plurality of slot groups formed at intervals in a circumferential direction, each of the slot groups has a plurality of curved slots which are formed at intervals in a radial direction of the shaft and are curved in a convex circular arc shape toward an inner side in the radial direction, each of the curved slots has an internal inner surface on the inner side in the radial direction and an external inner surface on the outer side in the radial direction, the internal inner surface and the external inner surface are formed in a circular arc shape having the same center in all of the curved slots, a separation distance between the internal inner surface and the external inner surface in each curved slot is the same as a separation distance between both inner surfaces in any other curved slot, a curvature of the internal inner surface of each curved slot is the same as a curvature of the internal inner surface of any other curved slot, a curvature of the external inner surface in each curved slot is the same as a curvature of the external inner surface in any other curved slot, and the permanent magnet is disposed in each curved slot, and each has a circular arc shape of the same size curved along the internal inner surface and the external inner surface of each curved slot.

In the configuration of the rotor of the electric motor, a larger number of permanent magnets may be disposed in a curved slot closer to the axis.

Further, in the configuration of the rotor of the electric motor, at least some parts of the permanent magnets adjacent to each other may be separated from each other, and a through-hole penetrating in a thickness direction may be provided in a separated portion.

Further, in the configuration of the rotor of the electric motor, the through-hole may be enlarged in the axial direction outside the curved slot.

Further, in the configuration of the rotor of the electric motor, a cross-sectional area of the through-hole may be 1.0% or more and 15% or less of a cross-sectional area of the whole rotor.

A compressor according to an aspect of the present invention includes the rotor of the electric motor of the aforementioned configuration.

The rotor of the electric motor of the present invention has a plurality of curved slots having a circular arc shape close to that of the original flow of the magnetic flux generated by the stator winding, and is advantageous from the viewpoint of reluctance generation. All the permanent magnets embedded in the curved slot have a circular arc shape that is curved along the inner side surface and outer side surface of the curved slot. Accordingly, when the permanent magnets are embedded and arranged, it is possible to reduce the gap generated between the permanent magnets. Therefore, since a magnetic circuit through which the magnetic flux of the magnet easily passes (permeance is high) is formed inside the curved slot, a large magnet torque can be generated.

Further, since the rotor of the electric motor of the present embodiment has the same shape and the same size in all of the curved slots, it is possible to make all the shapes and sizes of the permanent magnets embedded in the curved slots uniform. Therefore, only one type of permanent magnet to be manufactured may be used, and manufacturing facilities can be simplified and the manufacturing costs can be reduced, as compared with a case of manufacturing a plurality of types of permanent magnet.

### BRIEF DESCRIPTION OF THE DRAWINGS

FIG. 1 is a longitudinal sectional view of a rotary compressor according to a first embodiment of the present invention.
FIG. 2 is a cross-sectional view of the rotary compressor according to the first embodiment of the present invention.
FIG. 3A is a plan view of a rotor of an electric motor according to the first embodiment of the present invention, and FIG. 3B is an enlarged plan view of a part of the rotor of FIG. 3A.
FIGS. 4A and 4B are plan views of a rotor of an electric motor according to a second embodiment of the present invention.
FIG. 5 is a graph of an average torque when driving using the rotor of the electric motor according to the first embodiment and the second embodiment of the present invention.

### DETAILED DESCRIPTION OF THE INVENTION

Hereinafter, a rotor of an electric motor, which is an embodiment to which the present invention applies, will be described in detail with reference to the drawings. In the drawings used in the following description, for the sake of easy understanding of the features, there are cases where characteristic portions are shown in an enlarged manner for convenience, and dimensional ratios or the like between each of components are not necessarily the same as actual ones. Further, the materials, dimensions, and the like provided as exemplary examples in the following description are merely examples, and the present invention is not limited thereto, and can be realized by appropriately changing these within a range that does not change the gist thereof.

### <First Embodiment

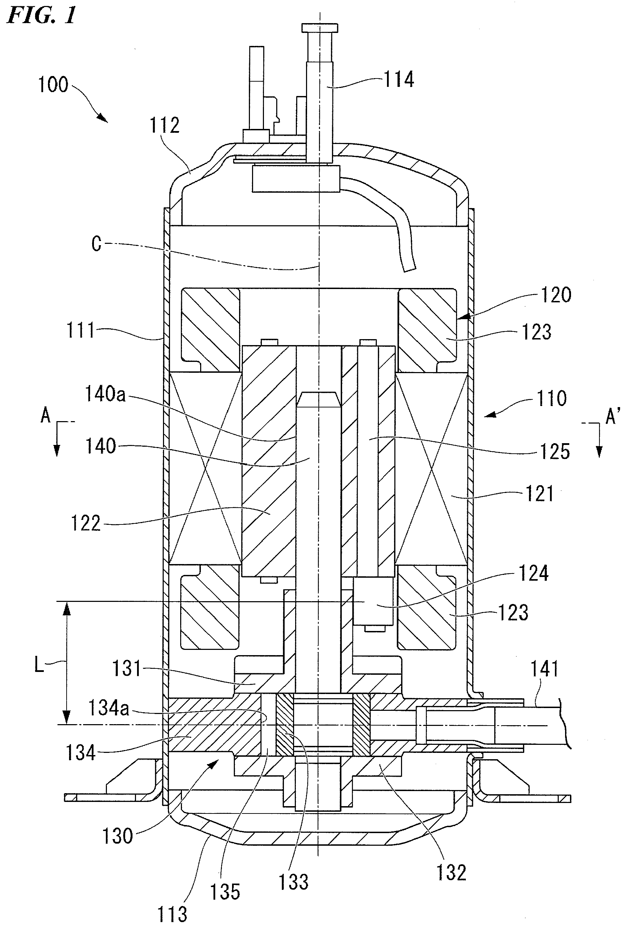

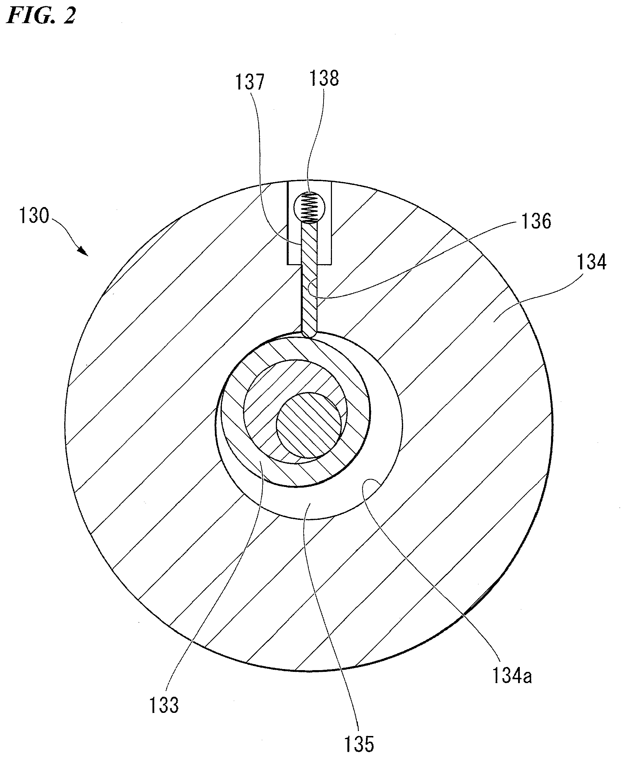

A compressor 100 equipped with a rotor of an electric motor according to a first embodiment will be described with reference to FIGS. 1 and 2. Here, the compressor 100 means, for example, a hermetic rotary compressor used for an air conditioner, a refrigerator, and the like, and is connected to a refrigerant circuit (not shown). That is, the compressor 100 is a machine that is incorporated in a refrigerant circuit having a condenser, an expansion valve, an evaporator, and the like to compress the refrigerant flowing inside the piping of the refrigerant circuit.

As shown in FIG. 1, the compressor 100 includes a cylindrical case 110, an electric motor (a drive mechanism) 120 accommodated in the case 110, and a compression mechanism 130 driven by the electric motor 120 inside the case 110. The compressor 100 has a cantilever structure which supports a rotary shaft 140 in a cantilever manner such that a first end portion (an upper side in FIG. 1) of the rotary shaft 140 of the electric motor 120 serves as a free end side. That is, the rotary shaft 140 is not supported at both ends, and only a second end portion (a lower side in FIG. 1) on a side opposite to the first end portion is supported by bearings 131 and 132.

The case 110 has a cylindrical body 111, a top cover 112 welded to the upper end of the body 111, and a bottom cover 113 welded to the lower end of the body 111. The electric motor 120 and the compression mechanism 130 are hermetically sealed inside the case 110. A suction pipe 141 connected to the compression mechanism 130 is provided on the body 111. The suction pipe 141 is, for example, a pipe which suctions the refrigerant gas into the compression mechanism 130 via an accumulator.

The electric motor 120 includes a stator 121 fixed to an inner circumferential surface of the case 110, and a rotor 122 disposed inside the stator 121 and rotated by energization to the stator 121. Further, coil ends 123, which are end portions of a coil bundle, are provided at the upper end and the lower end of the stator 121, respectively. The rotational driving force of the electric motor 120 is output to the rotary shaft 140 fixed to the rotor 122. The rotary shaft 140 is disposed along the vertical direction, and extends downward from the rotor 122.

The compression mechanism 130 includes a piston rotor 133 attached eccentrically to a second end portion on the side opposite to the first end portion of the rotary shaft 140, a cylinder 134 in which the piston rotor 133 is accommodated, and an upper bearing 131 and a lower bearing 132 that support the rotary shaft 140 in a rotatable manner.

The piston rotor 133 has a shape that is eccentric with respect to the axial center of the rotary shaft 140, and is fitted to the outer circumference of the rotary shaft 140. The piston rotor 133 is a member which is inserted into an eccentric portion of the rotary shaft 140 between the upper bearing 131 and the lower bearing 132, and pivots about the axis of the rotary shaft 140.

The cylinder 134 has an inner circumferential surface 134a having a cylindrical surface shape that comes into slide-contact with the outer circumferential surface of the piston rotor 133 at one position on the circumference with a small linear clearance. An axial center of the inner circumferential surface 134a of the cylinder 134 coincides with the axial center of the rotary shaft 140. An inner space of the inner circumferential surface 134a of the cylinder 134 is hermetically sealed by the piston rotor 133, the upper bearing 131, and the lower bearing 132 to form a compression chamber 135. The compression mechanism 130 has a function of compressing the refrigerant gas introduced into the compression chamber 135, by bringing the piston rotor 133 close to the inner circumferential surface of the cylinder 134 while rotating the piston rotor 133, and by decreasing the volume of the compression chamber 135.

As shown in FIG. 2, the cylinder 134 has a slot 136 formed at one position in the circumferential direction and penetrating in a radial direction. A plate-like blade 137 is inserted into the slot 136. A proximal end of the blade 137 located on the radially outer side is pressed radially inward by a coil spring 138. A distal end of the blade 137 is always pressed against the outer circumferential surface of the piston rotor 133, by the pressing force of the coil spring 138 and the pressure of the compressed refrigerant in the case 110. The blade 137 appears and disappears with respect to the interior of the cylinder 134 along the slot 21, while following the movement of the piston rotor 133. The blade 137 is formed to have the same height as the axial dimension of the piston rotor 133, and partitions the compression chamber 135, which is a space having a crescent-shaped cross section formed between the inner circumferential surface 134a of the cylinder 134 and the outer circumferential surface of the piston rotor 133, into two spaces. The volumes of the two spaces are proportionally distributed in accordance with the rotation angle of the piston rotor 133.

As shown in FIG. 1, a balance weight 124 (counterweight) is attached to the rotor 122 of the electric motor so as to minimize run-out at the time of driving of the electric motor 120. That is, in order to cancel out the centrifugal force generated by the high-speed rotation of the piston rotor 133 which is an eccentric rotation portion of the compression mechanism 130, a balance weight 124 that generates a centrifugal force in a direction opposite to the piston rotor 133 is attached.

The balance weight 124 is attached to an end portion (the lower portion of the rotor 122) facing the compression mechanism 130 in the axial direction of the rotor 122. The balance weight 124 is formed of aluminum. It is not necessary to form the balance weight 124 of aluminum, and any material such as a copper alloy, steel, or the like can be used.

In the compressor 100, the refrigerant gas, which is introduced into the compression mechanism 130 through a suction pipe 141 and compressed by the compression mechanism 130, flows to the upper part of the case 110 via the plurality of through-holes 125, and is filled into the case 110. The refrigerant gas is discharged to the refrigerant circuit through the discharge pipe 114 penetrating the top cover 112.

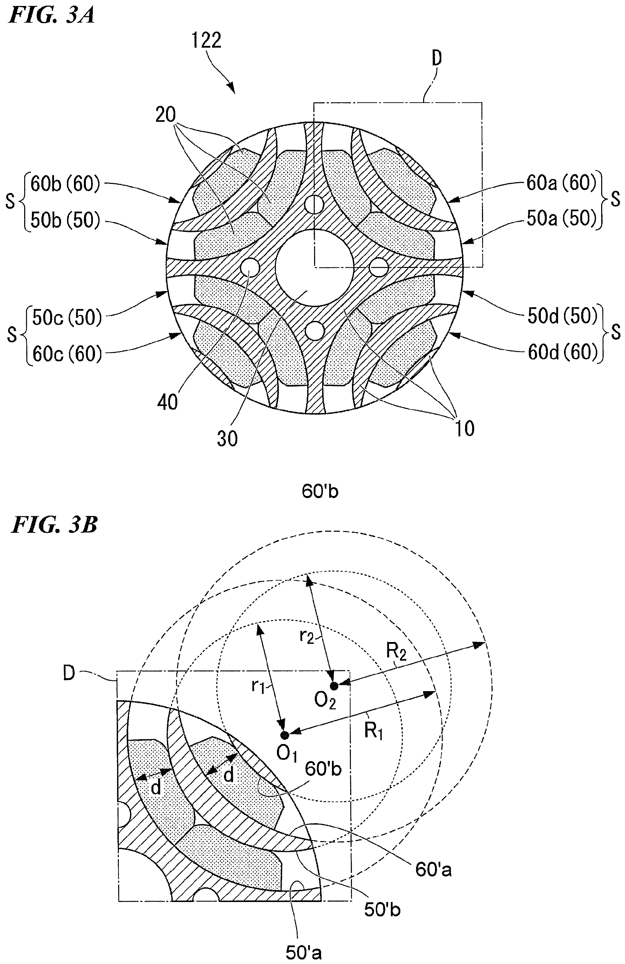

The configuration of the rotor 122 of the electric motor provided in the compressor 100 will be described with reference to FIGS. 1 and 3. FIG. 3A is a cross-sectional view of the rotor 122 of the electric motor when the compressor 100 of FIG. 1 is cut along the line A-A'.

The rotor 122 includes a shaft (rotary shaft) 140 extending along an axis C, a rotor core 10 fixed to the outer circumferential surface 140a of the shaft, and a plurality of permanent magnets 20 disposed in the rotor core 10. A shaft hole 30 through which the shaft 140 penetrates is provided at the center of the rotor 122, and a caulking fixing hole 40 is provided around the shaft hole 30. Further, the shaft 140 is not shown in FIGS. 3A.

The rotor core 10 has a plurality of slot groups S formed at a predetermined interval in the circumferential direction. FIG. 3A shows a case where there are four slot groups S, but there may be five or more slot groups.

Each slot group S has a plurality of curved slots (slits). FIG. 3 shows a case where two curved slots (two layers) are provided in each slot group S, but three or more curved slots (three layers) may be provided. The curved slots are formed at a predetermined interval in the radial direction (a direction away from the axis C) of the shaft 140.

In FIG. 3A, eight curved slots 50a, 60a, 50b, 60b, 50c, 60c, 50d, and 60d are shown. However, in the following description, these curved slots are referred to as curved slots 50 and 60, in order from the axis C side. That is, the curved slots 50a to 50d of the first layer counted from the axis side are collectively referred to as a curved slot 50, and the curved slots 60a to 60d of the second layer are collectively referred to as a curved slot 60.

FIG. 3B is an enlarged view of a region D surrounded by a broken line in the rotor of FIG. 3A. In any of the curved slots 50 and 60, an internal inner surface and an external inner surface are formed in a circular arc shape with the same center. That is, as shown in FIG. 3B, the internal inner surface and the external inner surface constituting the curved slot 50 have a circular arc shape with the same center O₁, and the internal inner surface and the external inner surface constituting the curved slot 60 have a circular arc shape with the same center O₂.

The curved slots 50 and 60 have a shape which is curved in a convex circular arc shape toward the radially inner side (the axis C side) in a plan view from a position spaced apart in the direction of the axis C. The curved slot 50 includes an internal inner surface 50'a located on the radially inner side (the side close to the axis), an external inner surface 50'b located on the radially outer side (the side away from the axis), and an intermediate surface which connects the internal inner surface 50'a and the external inner surface 50'b. Further, similarly, the curved slot 60 also has an internal inner surface 60'a, an external inner surface 60'b, and an intermediate surface which connects the internal inner surface 60'a and the external inner surface 60'b. Specifically, the internal inner surfaces 50'a and 60'a, and the external inner surfaces 50'b and 60'b are curved in a convex circular arc shape toward the inner side in the radial direction.

A separation distance d between the internal inner surface and the external inner surface of each curved slot is the same as a separation distance d between both inner surfaces in any other curved slot, regardless of differences in the slot group S. The separation distance d is preferably 10% or more and 30% or less of the rotor radius. Here, as an example, a case where the separation distance d is 15.7% of the rotor radius is shown.

A curvature (a curvature radius R) of the internal inner surface of each curved slot is the same as a curvature of the internal inner surface of any other curved slot, regardless of differences in the slot groups S. That is, as shown in FIG. 3B, the curvature radii R₁ and R₂ of the internal inner surfaces 50'a and 60'a in the curved slots 50 and 60 are identical to each other. The curvature of the internal inner surface is preferably 50% or more and 90% or less of the radius of the rotor in terms of the radius of curvature. Here, as an example, the case where the radius of curvature is 78% of the rotor radius is shown.

Further, the curvature (the radius of curvature r) of the external inner surface of each curved slot is also the same as the curvature of the external inner surface of any other curved slot, regardless of differences in slot groups S. That is, as shown in FIG. 3B, the curvature radii r₁ and r₂ of the external inner surfaces 50'b and 60'b of the curved slots 50 and 60 are identical to each other. The radius of curvature r of the external inner surface can be obtained as a difference (R - d) between the radius of curvature R of the internal inner surface and the separation distance d.

The same number of permanent magnets 20 is arranged in the curved slots of the same layer. That is, the number of accommodated permanent magnets 20 is the same among the first layers and the second layers of each slot group S.

Each of the permanent magnets 20 has a circular arc shape of the same size curved along the internal inner surface and the external inner surface of each curved slot. That is, each of the plurality of permanent magnets 20 has a surface having the same curvature as that of the internal inner surface of the curved slot, and a surface having the same curvature as that of the external inner surface. In FIG. 3A, the permanent magnet 20 disposed in the curved slot 50 is curved along an inner side surface 50'a and an outer side surface 50'b, and the permanent magnet 20 disposed in the curved slot 60 is curved along an inner side surface 60'a and an outer side surface 60'b.

Since a curved slot closer to the axis C forms a longer circular arc, more permanent magnets 20 can be disposed (accommodated) in the curved slots. Specifically, one permanent magnet is disposed in the curved slot 60, whereas two permanent magnets 20 are disposed in the curved slot 50 having a circular arc shape longer than the curved slot 60.

As described above, the rotor of the electric motor according to the present embodiment has a plurality of curved slots having the circular arc shape close to the original flow of magnetic flux generated by the stator winding, and has an advantageous structure from the viewpoint of reluctance generation. All the permanent magnets embedded in the curved slot have a circular arc shape that is curved along the inner side surface and outer side surface of the curved slot. Thus, when the permanent magnets are embedded and arranged, it is possible to reduce the gap generated between the permanent magnets. Therefore, since a magnetic circuit through which the magnetic flux of the magnet easily passes (permeance is high) is formed inside the curved slot, a large magnet torque can be generated.

Further, since the rotor of the electric motor according to the present embodiment has the same shape and the same size in all of the curved slots, it is possible to make all the shapes and sizes of the permanent magnets embedded in the curved slots uniform. Therefore, only one type of permanent magnet to be manufactured may be used. As compared with the case of manufacturing a plurality of types of permanent magnet, the manufacturing facilities can be simplified, and the manufacturing costs can be reduced.

### <Second Embodiment>

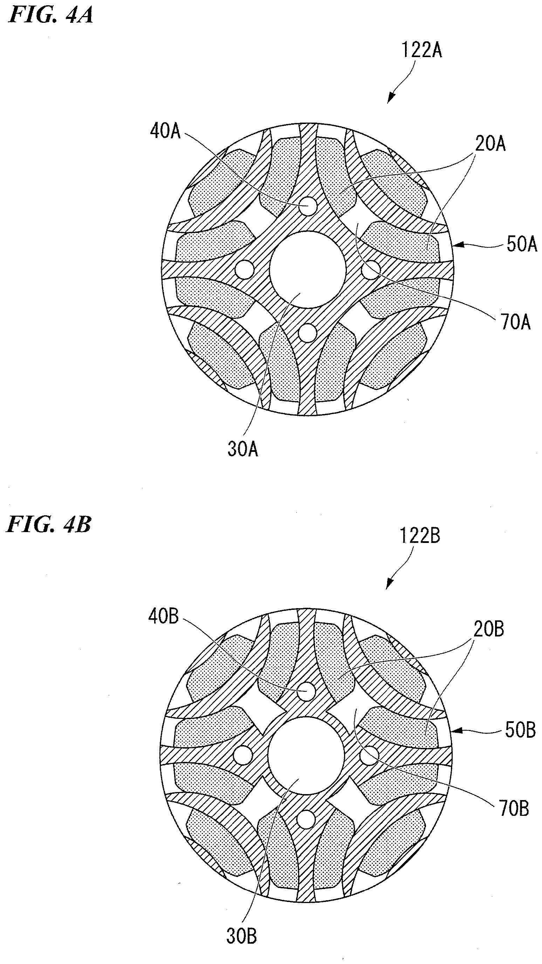

A rotor 122A of an electric motor according to the second embodiment will be described with reference to FIG. 4A. FIG. 4A is a cross-sectional view of the rotor 122A. The configuration of the rotor 122A is different from the configuration of the rotor 122 of the first embodiment in that at least some parts of the adjacent permanent magnets 20A are separated from each other, and a through-hole 70A in a thickness direction (an axial length direction) of the rotor 122A is provided in a separated portion. The cross-sectional area of the through-hole 70A is preferably 1.0% or more and 15% or less of the cross-sectional area of the whole rotor 122A. Here, as an example, a proportion occupied by the cross-sectional area of the four through-holes 70A in the cross-sectional area of the whole rotor 122A is set to 4.0%.

FIG. 4A shows an example in which the through-hole 70A is provided in the curved slot 50A of the second layer counted from an outermost circumference side. However, when the curved slots of three or more layers are formed, the through-hole 70A may be provided on the second layer or on the third or higher layers. The configuration other than the through-hole 70A is the same as that of the rotor 122 of the first embodiment, and has the same effect as the rotor 122. Like the rotor 122 according to the first embodiment, the rotor 122A according to the present embodiment can be used by being provided in the compressor 100 shown in FIGS. 1 and 2.

For a compressor motor in which a refrigerant flows in the axial length direction, it is desirable to provide a through-hole in the axial length direction which functions as a refrigerant passage in the rotor cross section. The reason for this is that, by providing the through-hole, a pressure difference between a primary space (a motor lower part) and a secondary space (a motor upper part) is eliminated, and an effect of improving the efficiency of the whole compressor by reducing the pressure loss can be obtained. However, in a motor in which a multilayer slit having two or more layers is provided to embed the magnet, since the proportion of the magnet region occupied by the rotor is large, there is a case where it is difficult to provide holes necessary for caulking and fixing the laminated core in the axial length direction and to install a refrigerant passage in terms of strength.

In the rotor 122A according to the present embodiment, the through-hole 70A is provided at a position that does not obstruct the flow of the magnetic flux. That is, since the permanent magnets 20A disposed in the respective curved slots in the second or higher layers are configured by a combination of a plurality of magnets, if these magnets are separately disposed, the through-hole 70A is formed as shown in FIG. 4A.

The through-hole 70A is a hole opening in the iron core as a magnet insertion hole, and since the distance from the shaft hole 30A and the caulking fixing hole 40A is sufficiently secured, even if the magnet is not inserted, there is no concern regarding the strength. Therefore, if the through-hole 70A is utilized as a refrigerant passage, it is possible to reduce the pressure difference between the primary space and the secondary space in the hermetic compressor, while minimizing concern about the rotor strength. As a result, the effect of reducing the pressure loss and improving the efficiency of the compressor at the time of refrigerant circulation is obtained.

The shape of the through-hole as the refrigerant passage may be enlarged within a range that does not cause concern regarding strength. FIG. 4B is a cross-sectional view of the rotor 122B according to a modified example of the present embodiment. In the rotor 122A of the present embodiment shown in FIG. 4A, a region in which the through-hole 70A is formed is limited to only a region between adjacent permanent magnets in the curved slot 50A. In contrast, in the rotor 122B according to this modified example, this region is further enlarged (extended, lengthened) in the direction of the axis C outside the curved slot 50B. The configuration other than the region in which the through-hole 70B is formed is the same as that of the rotor 122A, and has the same effects as the rotor 122A.

The shape and size of the cross section of the through-hole 70B of FIG. 4B are determined such that a sufficient distance is secured from the shaft hole 30B and the caulking fixing hole 40B so as not to cause concern regarding strength. A preferable range of the cross-sectional area proportion of the through-holes 70B is the same as in the case of configuration as shown in FIG. 4A. Here, as an example, the cross-sectional area occupied by the four through-holes 70B in the cross-sectional area of the whole rotor 122B is set to 5.5%.

### [Examples]

Hereinafter, the effect of the present invention will be made clear by examples. It should be noted that the present invention is not limited to the following examples, and can be realized with appropriate modifications within a scope that does not change the gist thereof.

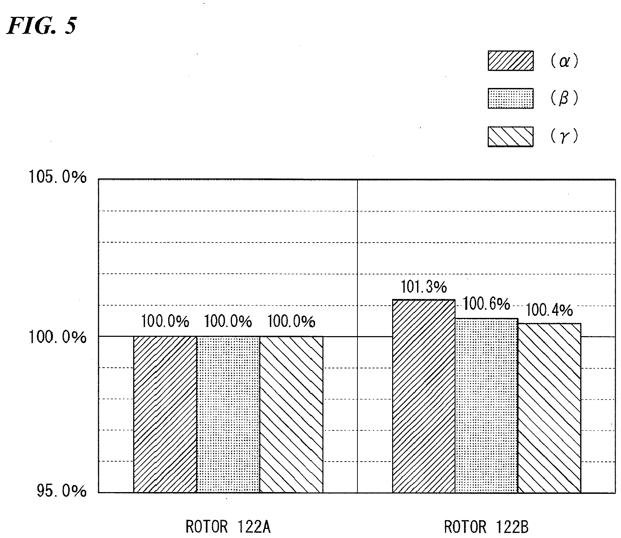

For each of the rotors 122A and 122B of FIGS. 4A and 4B, the average torque in a case where the same stator was combined therewith and driven under the current conditions under the following conditions (α) to (γ) was obtained by magnetic field analysis. The obtained average torque is shown in the graph of FIG. 5.
(α) 2 Arms (current phase 30 degrees)
(β) 4 Arms (the same as above)
(γ) 6 Arms (the same as above)

In the graph of FIG. 5, the left side corresponds to the results for the rotor 122A, and the right side corresponds to the results for the rotor 122B. The vertical axis of the graph indicates a change rate of the average torque with the results of the rotor 122A as a reference (100%). In any of the current conditions, the average torque for the rotor 122B exceeds the average torque for the rotor 122A. It can be seen that the average torque increases under a condition in which the current value is small (a condition in which the magnet torque is dominant). From these results, it is thought that the flow of the magnetic flux at the magnet end portion is restricted by enlarging the through-hole 70B as shown in FIG. 4B, and the short circuit magnetic flux is reduced.

According to the rotor of the electric motor, a large magnet torque can be generated. Further, it is possible to simplify the manufacturing facilities and to reduce manufacturing costs.

While preferred embodiments of the invention have been described and shown above, it should be understood that these are exemplary examples of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### EXPLANATION OF REFERENCES

100 Compressor
110 Case
111 Body
112 Top cover
113 Bottom cover
120 Electric motor
121 Stator
122, 122A, 122B Rotor
123 Coil end
124 Balance weight
130 Compression mechanism
131, 132 Bearing
133 Piston rotor
134 Cylinder
134a Inner circumferential surface
135 Compression chamber
136 Slots
137 Blade
138 Coil spring
140 Rotary shaft
10 Rotor core
20, 20A, 20B Permanent magnet
30, 30A, 30B Shaft hole
40, 40A, 40B Caulking fixing hole
50, 60, 50B Curved slot
50'a, 60'a Internal inner surface
50'b, 60'b External inner surface
70A, 70B Through-hole
C Axis
D Region
d Separation distance
O₁, O₂ Center
R₁, R₂, r₁, r₂ Curvature radius
S Slot group

## Claims

1. A rotor (122;122A;122B) of an electric motor, the rotor comprising:
a shaft (140) extending along an axis (C);
a rotor core (10) fixed to an outer circumferential surface (140a) of the shaft; and
a plurality of permanent magnets (20;20A;20B) disposed in the rotor core,
wherein the rotor core has a plurality of slot groups (S) formed at intervals in a circumferential direction,
each of the slot groups (S) has a plurality of curved slots (50,60;50A;50B) which are formed at intervals in a radial direction of the shaft (140) and are curved in a convex circular arc shape toward an inner side in the radial direction,
each of the curved slots (50,60;50A;50B) has an internal inner surface (50'a,60'a) on the inner side in the radial direction and an external inner surface (50'b,60'b) on the outer side in the radial direction,
the internal inner surface and the external inner surface are formed in a circular arc shape having the same center in all of the curved slots (50,60;50A;50B),
a separation distance (d) between the internal inner surface and the external inner surface in each curved slot (50,60;50A;50B) is the same as a separation distance between both inner surfaces in any other curved slot,
a curvature (R) of the internal inner surface (50'a,60'a) of each curved slot (50,60;50B) is the same as a curvature of the internal inner surface of any other curved slot,
a curvature (r) of the external inner surface (50'b,60'b) in each curved slot (50,60;50A;50B) is the same as a curvature of the external inner surface in any other curved slot, and
the permanent magnet (20;20A;20B) is disposed in each curved slot, and has a circular arc shape of the same size curved along the internal inner surface (50'a,60'a) and the external inner surface (50'b,60'b) of each curved slot (50,60;50A;50B).

2. The rotor of the electric motor according to claim 1, wherein a larger number of permanent magnets (20;20A;20B) are disposed in the curved slot (50,60;50A;50B) closer to the axis.

3. The rotor of the electric motor according to claim 1 or 2, wherein at least some parts of the permanent magnets (20A;20B) adjacent to each other are separated from each other, and a through-hole (70A;70B) penetrating in a thickness direction is provided in a separated portion.

4. The rotor of the electric motor according to claim 3, wherein the through-hole (70B) is enlarged in the axial direction outside the curved slot.

5. The rotor of the electric motor according to claim 3 or 4, wherein a cross-sectional area of the through-hole (70A;70B) is 1.0% or more and 15% or less of a cross-sectional area of the whole rotor.

6. A compressor comprising the rotor (122;122A;122B) of the electric motor according to any one of claims 1 to 5.
